Europäisches Patentamt

(19) European Patent Office

Office européen des brevets

(11) Veröffentlichungsnummer: **0 299 106**
**B1**

(12) **EUROPÄISCHE PATENTSCHRIFT**

(45) Veröffentlichungstag der Patentschrift: **23.01.91**

(21) Anmeldenummer: **87110393.3**

(22) Anmeldetag: **17.07.87**

(51) Int. Cl.⁵: **A 23 F 5/14, A 23 F 5/40**

(54) **Röst- und Instantkaffee sowie Verfahren zu deren Herstellung.**

(43) Veröffentlichungstag der Anmeldung:
**18.01.89 Patentblatt 89/03**

(45) Bekanntmachung des Hinweises auf die
Patenterteilung: **23.01.91 Patentblatt 91/04**

(84) Benannte Vertragsstaaten:
**AT BE CH DE ES FR GB GR IT LI LU NL SE**

(56) Entgegenhaltungen:
**EP-A-0 107 171**
**EP-A-0 108 038**
**WO-A-87/04598**
**FR-A- 676 752**
**GB-A- 455 902**
**US-A-2 198 207**

**R.J. CLARKE et al.: "Coffee", Band 1: Chemistry, 1985, Seiten 156-157,191-195, Elsevier Applied Science Publishers**

**Die Akte enthält technische Angaben, die nach dem Eingang der Anmeldung eingereicht wurden und die nicht in dieser Patentschrift enthalten sind.**

(73) Patentinhaber: **CODE Kaffee-Handelsgesellschaft mbH**
**Überseering 18**
**D-2000 Hamburg 60 (DE)**

(72) Erfinder: **Ball, Michael, Dr.**
**Hagenwisch 2c**
**D-2083 Halstenbek (DE)**
Erfinder: **Buchholz, Klaus, Dr.**
**Hoopwischen 36**
**D-2000 Hamburg 65 (DE)**
Erfinder: **Gösswein, Claus F., Dr.**
**Ellernbrook 20**
**D-2110 Buchholz 5 (DE)**
Erfinder: **Hubert, Peter**
**Hasenkamp 21**
**D-2150 Buxtehude (DE)**
Erfinder: **Kopsch, Reiner**
**Möwenring 7d**
**D-2000 Schenefeld (DE)**
Erfinder: **Lutz, Henning, Dr.**
**Hagenwisch 2a**
**D-2083 Halstenbek (DE)**

(74) Vertreter: **UEXKÜLL & STOLBERG**
**Patentanwälte**
**Beselerstrasse 4**
**D-2000 Hamburg 52 (DE)**

**Beschreibung**

Die Erfindung betrifft Röst- oder Instantkaffee mit einem erhöhten Gehalt an Mono- und Dicaffeoylchinasäuren, sowie Verfahren zu deren Herstellung. Die 3-, 4- und 5-Monocaffeoylchinasäuren und die 3,4-, 3,5- und 4,5-Dicaffeoylchinasäuren werden nachfolgend zusammengefaßt auch als Gesamt-Chlorogensäure bezeichnet.

Beim Rösten von Rohkaffee tritt ein beträchtlicher Gewichtsverlust auf; normalerweise liegt der Einbrand bei etwa 12 bis 17 Gew.%. Der Verlust ist nicht nur auf die im Rohkaffee nach dessen Trocknen noch vorhandene Restfeuchtigkeit zurückzuführen, welche beim Rösten Verlorengeht. Auch verschiedene Inhaltsstoffe des Rohkaffees werden beim Röstprozeß verdampft oder chemisch abgebaut und gehen so verloren. Zu den Inhaltsstoffen des Rohkaffees, deren Gehalt durch das Rösten beträchtlich abnimmt, gehört auch die Chlorogensäure. Dieser Abbau der Chlorogensäure wurde bislang in Kauf genommen, weil sie als unerwünschter Bestandteil galt (vergl. DE-PS 685 367, Seite 1, Zeilen 44/45).

Es sind verschiedene Verfahren zur Herstellung von coffein-armem bzw. coffein-freiem Kaffee durch Entzug des Coffeins aus dem Rohkaffee bekannt. Bei diesen Verfahren wird der Rohkaffee mit Wasser oder einem anderen Lösungsmittel extrahiert, worauf dem Extrakt mit Hilfe organischer Lösungsmittel oder fester Adsorptionsmittel das Coffein entzogen wird (DE-PS-685-367; EP-PS-8398). Der von Coffein befreite Extrakt kann gegebenenfalls dem Rohkaffee wieder zugesetzt werden, so daß dem Röstprozeß grüne Kaffeebohnen unterworfen werden, welche bis auf das Coffein alle Inhaltsstoffe vollständig enthalten (DE—B—685 367, Seite 1, Zeilen 29—31). Es ist ferner bereits schrieben worden, dem Rohkaffee das Coffein auf diese Weise zu entziehen, daß er mit einem Extrakt in Kontakt gebracht wird, welcher an allen extrahierbaren Inhaltsstoffen bis auf das Coffein gesättigt ist. Das Coffein des Rohkaffees geht selektiv in diesen Extrakt über und wird letzterem anschließend wieder entzogen (DE—A—31 19 277; EP—A—78088). Auch mit Hilfe dieser Verfahren wird ein coeffein-armer bzw. entcoffeinierter Rohkaffee gewonnen, bei dessen Röstung andere Inhaltsstoffe, insbesondere ein beträchtlicher Teil der Chlorogensäure verloren gehen. Bei den älteren Verfahren wird die Chlorogensaure als vermeintlich unerwünschter Bestandteil sogar bereits bei der Extraktion entfernt (DE—B—685 367, Seite 1, Zeilen 43—49).

Es wurde gefunden, daß Röst- oder Instantkaffee mit einem höheren Gehalt an Inhaltsstoffen des Rohkaffees, insbesondere an Monocaffeoylchinasäuren, eine verbesserte Bekömmlichkeit aufweist (vergl. die nicht vorveröffentlichte WO 87/04598), ohne daß Geschmackseinbußen auftreten. Es wurde ferner festgestellt, daß Chlorogensäure die Magenschleimhaut gegen Reizungen zu schützen vermag und daher die Bekömmlichkeit von Nahrungs-, Genuß- und Arzneimitteln verbessert (vergl. die nicht vorveröffentlichte DE—B—36 03 576).

Es wurde demgegenüber nunmehr festgestellt, daß die 3,4-, 3,5- und 4,5-Dicaffeoylchinasäuren vergleichbare physiologische Wirkungen wie die 3, 4- und 5-Monocaffeoylchinasäuren aufweisen, so daß durch ihre Anwesenheit ebenfalls die Bekömmlichkeit von Kaffee verbessert wird. Sie kommen in Rohkaffee neben den Monosäuren vor und sind daher auch bei der Festlegung der notwendigen Mindestgehalte mit zu berücksichtigen.

Die verbesserte Bekömmlichkeit des Kaffees ist an einer deutlich reduzierten Säurekretion nachzuweisen. Diese Reduzierung wird offenbar dadurch erhalten, daß der in jedem Röstkaffee vorhandene Anteil an Röststoffen, deren physiologische Wirkung sich in Unverträglichkeiten (Sodbrennen etc.) äußert, durch einen erhöhten Gehalt an Mono- und Dicaffeoylchinasäuren kompensiert wird.

Die Bekömmlichkeit eines Röstkaffees hängt danach von dem Verhältnis der Mono- und Dicaffeoylchinasäuren zu den Röststoffen im Kaffeeaufguß ab. Unter diesem Gesichtspunkt wäre es erwünscht zu verhindern, daß der Gehalt an Mono- und Dicaffeoylchinasäuren durch die Röstung des Kaffees stark erniedrigt wird. Normalerweise nimmt der natürliche Gehalt an Mono- und Dicaffeoylchinasäuren von Kaffee beim Rösten je nach dem Anfangsgehalt um etwa 40 bis 80% ab, so daß im Röstkaffee nur noch etwa 2 Gew.%, äußerstenfalls etwa 2,4 bis 2,6 Gew.% Monosäuren und 0,1 bis 0,6 Gew.% Disäuren bzw. 3,18 Gew.% Gesamtchlorogensäure (bestimmt mittels HPLC) gefunden werden (vergl. G. Lehmann u. B. Binkle, Deutsche Lebensmittel-Rundschau 79, 266—269 (1983); der dort angegebene Wert für die Probe 5 ist auf 3,18 Gew.% zu berichtigen, wie die Einzelwerte zeigen). Ältere Arbeiten (z.B. G. Lehmann et al. Deutsche Lebensmittel-Rundschau 63, 144—151 und 273—275 (1967); G. Lehmann, Ernährungs-Umschau 1971, 43—47) berichten zwar über wesentlich höhere Chlorogensäuregehalte in Röstkaffees und Instant-Kaffeepulvern. Die dabei angewandte Bestimmungsmethode erfaßt jedoch auch andere Verbindungen des Röstkaffees, insbesondere durch thermischen Abbau der Chlorogensäure gebildete Verbindungen, und liefert deshalb für Röstkaffee weit überhöhte Werte. Alle in der vorliegenden Beschreibung und den Ansprüche angegebenen Werte wurden mittels der HPLC-Methode (Hochdruckflüssigkeits-Chromatographie) erhalten und liegen gegenüber der früher verwendeten DIN-Methode oder anderen älteren Bestimmungsmethoden um ca. 50% niedriger (vergl. G. Lehmann und B. Binke, Deutsche Lebensmittel-Rundschau 79, 266—269 (1983); W. Schünemann und H. G. Maier, Deutsche Lebensmittel-Rundschau 82, 73—76 (1986)).

In der GB—A—455 902 werden ebenfalls relativ hohe Chlorogensäuregehalte für Röstkaffee angegeben. Diese Werte wurden nach der Methode von W. Hoepfner, Chemikerzeitung Nr. 100, S. 991 (1932), bestimmt, welche für die Analyse von Rohkaffee entwickelt und deren Anwendbarkeit auf Röstkaffee nicht geprüft wurde. Eine Nacharbeitung der Bestimmungsmethode von Hoepfner bei Rohkaffee und abgestuft gerösteten Kenia-Kaffeeproben ergab:

Selbst für Rohkaffee werden gegenüber der DIN-Methode und der HPLC-Methode beträchtlich höhere Werte gefunden,

bei Röstkaffees mit abgestuftem Röstgrad wird nach der Methode von Hoepfner mit ca. 25% eine wesentlich geringere Abnahme der Werte als Funktion des Röstgrades gefunden, während die tatsächliche Abnahme nach der HPLC-Methode bei über 50% liegt. In GB—A—455 902 wird eine 20%ige Abnahme in Kenia-Kaffee angegeben.

Es folgt daraus, daß die Bestimmungsmethode von Hoepfner, wie sie in der GB-PS angewendet wurde, neben Chlorogensäure auch andere Substanzen, insbesondere Röstprodukte, erfaßt und demgemäß für Chlorogensäure nicht spezifische ist. Die in der GB-PS angegebenen Werte sind daher gegenüber den tatsächlichen weit überhöht. Wenn man andererseits der Lehre der GB-PS folgend zur Erzielung einer besseren Lagerstabilität einen Kaffee nur so weit röstet, daß ein mittlerer Chlorogensäuregehalt zwischen dem von Rohkaffee und dem von normal geröstetem Kaffee erhalten wird, so ergeben sich daraus Röstkaffees mit Farbwerten oberhalb von 150 bis 160, also keine handelsüblichen normalen Röstkaffees, deren Farbwert nicht über 130, insbesondere nicht über 110 liegt.

Gegenstand der Erfindung ist demgemäß ein Röstkaffee mit einem erhöhten Gehalt an Mono- und Dicaffeoylchinasäuren, welcher in einer handelsüblichen Röstung mit einem Farbwert des gemahlenen Kaffees von 130 bis 90 mindestens 3,2 Gew.% beträgt, wobei der Gehalt an Mono- und Dicaffeoylchinasäuren bezogen auf den Mindestgehalt von 3.2 Gew.% prozentual um mindestens den halben Betragt weiter erhöht ist, um den jeweils der Farbwert prozentual unter den Wert von 90 fällt, bzw. ein Instantkaffeepulver mit einem erhöhten Gehalt an Mono- und Dicaffeoylchinasäuren, welcher mehr als 9,0 Gew.% beträgt. Der Gehalt an Mono-caffeoylchinasäuren beträgt vorzugsweise mindestens 2,8, insbesondere mindestens 3,0 Gew.% in Röstkaffee und mindestens 7,0, vorzugsweise mindestens 8,0 Gew.% in Instantkaffee. Wie oben bereits erwähnt, liegt der Gesamt-Chlorogensäuregehalt von üblichem Röstkaffee (Farbwert etwa 110 bis 90) bei nur etwa 2 Gew.% und erreicht in seltenen Fallen etwa 3,0 bis höchstens 3,18 Gew.% (Farbwert bis 130). Nur durch extrem milde Röstung, welche keinen geschmacklich einwandfreien, marktfähigen Kaffee mehr liefert, könnten höhere Chlorogensäuregehalte erzielt werden.

Der Bereich der Gesamt-Chlorogensäuregehalte in den erfindungsgemäßen Röstkaffees, bei denen eine positive physiologische Wirkung im Sinne besserer Bekömmlichkeit nachgewiesen werden kann, beginnt bei 3,2 Gew.%, wobei die schon erwähnte Relation zwischen Gesamt-Chlorogensäuregehalt und Röststoffpotential zu berücksichtigen ist. Letzteres ist vom Röstgrad und von der Extrahierbarkeit des Röstkaffees abhängig. Dies bedeutet, daß der Gesamt-Chlorogensäuregehalt prozentual mindestens um den halben Betrag erhöht werden sollte, um den jeweils der Röststoffgehalt (gemessen als Farbwert des gemahlenen Kaffees) zunimmt.

Der Farbwert von handelsüblichen normal gerösteten Kaffee-sorten liegt bei etwa 130 bis 90, insbesondere bei etwa 110 bis 90. Bei dem diesen Farbwerten entsprechenden Röststoffgehalt im Aufguß reicht erfindungsgemäß ein Gesamt-Chlorogensäuregehalt im Röstkaffee in der Größenordnung von mindestens 3,2, vorzugsweise mindestens 3,3 und insbesondere 3,4 Gew.% aus. Bei Erniedrigung des Farbwertes (entsprechend einem steigenden Röststoffgehalt) sollte erfindungsgemäß der Gesamt-Chlorogensäuregehalt üxer den Mindestgehalt hinaus angehoben werden. Wenn beispielsweise durch stärkere Röstung der Farbwert von 90 auf 80, d.h. um etwa 11% sinkt, sollte der Gesamt-Chlorogensäuregehalt um mindestens 5,5%, vorzugsweise um 11%, d.h. gegenüber 3,2 auf etwa 3,4 bis 3,55 Gew.% bzw. gegenüber 3,4 auf etwa 3,6 bis 3,8 Gew.% erhöht werden, um die physiologische Wirkung der Röststoffe wirksam zu kompensieren.

Der durch Reflexionsmessung an gemahlenem Röstkaffe bestimmte Farbwert ist anerkannterweise ein Maß für den Grad der Röstung von Kaffee. Im Rahmen der Erfindung beziehen sich alle Farbwertangaben auf die nachfolgend angegebene Meßmethode.

Es wurde gefunden, daß ein erhöhter Gehalt an Gesamt-Chlorogensäure erfindungsgemäß auf mehreren Wegen erreicht werden kann, wobei der Röstkaffee die Mono- und/oder Dicaffeoylchinasäuren auch teilweise in Firm von Salzen, insbesondere Salzen der Alkalimetalle, vorzugsweise vor allem als Kaliumsalze enthalten kann. Solche Salze entfalten im menschlichen Magen dieselbe Wirkung wie freie Säuren, da sie im stark sauren Magenmilieu weitgehend in die freien Säuren überführt werden.

Zur Herstellung des Röstkaffees kann man erfindungsgemäß so vorgehen, daß man durch Behandeln von Rohkaffee mit einem Lösungsmittel einen Extrakt herstellt, den extrahierten Kaffee und/oder eine nicht extrahierte Kaffeecharge röstet, den gegebenenfalls aufkonzentrierten Extrakt ganz oder teilweise dem Röstkaffee vor oder nach dem Mahlen zusetzt und den Kaffee dann trocknet. Die Inhaltsstoffe des Rohkaffee-Extrakts werden so an der Röstung vorbeigeführt und unterliegen keinem Abbau.

Als Lösungsmittel wird vorzugsweise Wasser verwendet. Vor dem Imprägnieren des Röstkaffees mit dem Rohkaffee-Extrakt wird letzterer vorzugsweise aufkonzentriert, so daß er einen Feststoffgehalt von mehr als 15, insbesondere mehr als 20 Gew.% aufweist. Der Extrakt wird auf den Röstkaffee, d.h. die gerösteten Bohnen oder gegebenenfalls auch den bereits gemahlenen Kaffee, aufgesprüht oder in getrockneter Form aufgestäubt. Gegebenenfalls wird anschließend zur Entfernung der Feuchtigkeit bei etwa 60 bis 120°C, vorzugsweise bei etwa 80 bis 100°C getrocknet, um die aus dem Extrakt stammende Feuchtigkeit zu vertreiben.

## EP 0 299 106 B1

Etwa 25 bis 28 Gew.% der Trockensubstanz grüner Kaffeebohnen sind grundsätzlich extrahierbar, doch werden erfindungsgemäß im allgemeinen nur etwa 5 bis 8 Gew.% extrahiert. Es ist nicht erforderlich, den gesamten Extrakt später dem Röstkaffee zuzusetzen. Vielmehr können auch nur ein Teil des Rohkaffee-Extraktes und/oder nur bestimmte Inhaltsstoffe hierfür ausgewählt werden. Beispielsweise kann man aus dem Rohkaffee-Extrakt bestimmte ausgewählte Inhaltsstoffe abtrennen, welche nach dem Rösten dem Kaffee wieder zugesetzt werden sollen, während man 0 bis 100% des zurückbleibenden Extraktes dem Rohkaffee vor dem Rösten wieder zufügt. Mit anderen Worten bedeutet dies, daß bestimmte Inhaltsstoffe aus dem Extrakt ausgewählt und dem Röstkaffee zugesetzt werden, während andere Inhaltsstoffe entweder ganz oder teilweise wieder dem Rohkaffee zugeführt und damit dem Röstprozeß unterworfen oder aber ganz abgetrennt und verworfen werden.

Für die Abtrennung und Auftrennung der Mono- und Dicaffeoylchinasäuren aus Rohkaffee-Extrakten kann die Gelpermeations-Chromatographie angewendet werden, wobei z.B. modifizierte Polysaccharide eingesetzt werden, die in Verbindung mit Wasser ein heteroporöses, gequollenes Netzwerk mit variabler Porengrößenverteilung ergeben. Die Fraktionierung der gelösten Substanzen erfolgt normalerweise nach Molekülgröße. Im Fall der Mono- und Dicaffeoylchinasäuren hat sich aber gezeigt, daß hier ein anderer Mechanismus wirksam sein muß, da die Säuren erheblich länger festgehalten werden, als aufgrund ihrer Molekülgröße zu erwarten wäre. Dadurch erscheinen sie erst in den letzten Eluatfraktionen. Die chlorogensäurefreien sowie die chlorogensäurehaltigen Eluate werden separat aufgefangen und aufkonzentriert. Die ersten werden gegebenenfalls dem Rohkaffee, die letzteren dem daraus hergestellten Röstkaffee zugesetzt. Die Gesamt-Chlorogensäuregehalte des Röstkaffees sind so nur abhängig vom Teilextraktionsgrad des Rohkaffees und können innerhalb dieses Rahmens beliebig eingestellt werden.

Eine weitere Möglichkeit zur Anhebung des Gesamt-Chlorogensäuregehalts im Röstkaffee besteht darin, daß man aus Rohkaffee ca. 5 bis 10 Gew.% seiner löslichen Bestandteile extrahiert, die entstandene Lösung auf einen Feststoffgehalt von z.B. 20% einengt und sie ohne weitere Behandlung dem teilextrahierten, auf einen mittleren Wassergehalt zurückgetrockneten Rohkaffee wieder zuführt. Das so erhaltene Material muß nochmals auf eine Feuchte getrocknet werden, die eine anschließende Röstung erlaubt. Überraschenderweise entsteht dabei ein Röstkaffee, der im Vergleich zu unbehandeltem Kaffee einen um bis zu 0,5 Gew.% erhöhten Gesamt-Chlorogensäuregehalt aufweist, was möglicherweise eine Folge der bei der Rohkaffee-Imprägnierung entstehenden asymmetrischen Extraktverteilung über den Bohnenquerschnitt ist.

Eine andere Möglichkeit besteht darin, daß man bereits bei der Extraktion das Verfahren so steuert, daß nur diejenigen Inhaltsstoffe dem Rohkaffee entzogen werden, welche später dem Röstkaffee wieder zugesetzt werden sollen. Dies kann beispielsweise in der Weise geschehen, daß man zum Extrahieren des Rohkaffees einen im Kreislauf geführten Extrakt verwendet, der nur hinsichtlich derjenigen Inhaltstoffe nicht gesättigt ist, die später dem Röstkaffee zugesetzt werden sollne. Nur diese Inhaltsstoffe gehen dann aus der Bohne in die Lösung über. Sie werden mit geeigneten Trennverfahren aus der Lösung separiert, aus dem Kreislauf ausgeschleust und später dem Röstkaffee wieder zugesetzt.

Die Extraktion des Rohkaffees im Rahmen des erfindungsgemäßen Verfahrens erfolgt nach den an sich bereits bekannten Verfahren, wie sie beispielsweise in der DE-OS-31 19 277 beschrieben sind.

Wie eingangs bereits erläutert, ist es ein besonderer Aspekt der Erfindung, daß mit ihrer Hilfe eine Röstkaffee mit erhöhtem Gesamt-Chlorogensäuregehalt erhalten werden kann, indem man dem Röstkaffee einen Mono- und Dicaffeoylchinasäuren enthaltenden Extrakt zusetzt. Gemäß einer weiteren Ausführungsform der Erfindung ist es jedoch auch möglich, Röstkaffee mit isolierten Mono- und/oder Dicaffeoylchinasäuren zu versetzen, welche aus grünen Kaffeebohnen oder anderen Pflanzen erhalten wurden (vergl. zum Isolierungsverfahren die DE—B—36 03 574 und die EP—A—299 107.

Nach einer anderen Ausführungsform kann ein Chlorogensäurezusatz auch zum Rohkaffee erfolgen, wobei aber zu beachten ist, daß wegen des thermischen Abbaus der Zusatz so dosiert werden muß, daß das Röstprodukt einen ausreichend hohen Gesamt-Chlorogensäuregehalt im Sinne der Erfindung aufweist.

Gemäß einer weiteren Ausführungsform wird Rohkaffee abgestuft mit verschiedenen Röstgraden geröstet, so daß die Einzelröstungen unterschiedliche Gesamt-Chlorogensäuregehalte ergeben. Daraus lassen sich Mischufgen zusammenstellen, die sensorisch vom üblichen Kaffeegetränk nicht abweichen und deren gemittelter Gesamtchlorogensäuregehalt deutlich höher liegt als der aus einer einheitlichen Röstung stammende. Diese Vorgehensweise liefert also überraschenderweise bei verhältnismäßig hohem Farbwert (niedrigem Röstgrad) ein Produkt, das sensorisch einem Kaffee mit üblichem Röstgrad entspricht. Dies gilt auch für die Röstung unterschiedlicher Provenienzen und/oder Arten, wobei deren Auswahl bereits unter dem Gesichtspunkt eines hohen Gesamt-Chlorogensäuregehalts im Ausgangsmaterial erfolgen kann.

Das Verfahren der Mischung unterschiedlich gerösteter Komponenten kann als eine auf die Erhöhung des Gesamt-Chlorogensäuregehalts ausgerichtete Mischungsoptimierung bezeichnet werden. Die damit erreichbare Anhebung führt zu Werten, die zur Erzielung des erfindungsgemäßen Gesamt-Chlorogensäuregehalts nur noch der Aufstockung durch relativ kleine Mengen Chlorogensäure aus externen Quellen bedarf. Sie kann aber auch erreicht werden durch geeignete Kombinationen der Mischungsoptimierung mit einer oder mehreren der vorstehend geschilderten Verfahrensvarianten.

Die erfindungsgemäßen Verfahrensweisen lassen sich auch zur Herstellung von coffeinfreiem oder teilentcoffeiniertem Röstkaffee anwenden, indem man von Rohkaffee ausgeht, welchem das Coffein teilweise oder ganz entzogen worden ist.

4

Auch pulverförmiger Löskaffee bzw. Instantkaffee läßt sich erfindungsgemäß gewinnen. Handelsübliche Kaffeepulver weisen Gesam-Chlorogensäuregehalte von etwa 3,75 bis 5,35 Gew.% auf, was bei üblicher Dosierung zu einem Gesamtchlorogensäuregehalt von etwa 55 bis 76 mg/100 ml Kaffee führt. Aus normalem Röstkaffee wird unter Anwendung der üblichen Filterzubereitungsmethoden ein Kaffee mit etwa 140 mg Gesamt-Chlorogensäure/100 ml Kaffee erhalten, d.h. der Gesamtchlorogensäuregehalt von Instantpulver ist besonders niedrig. In allen genannten Werten ist ein Dicaffeoylchinasäuregehalt von ca. 7% enthalten.

Bei Verwendung des erfindungsgemäßen Röstkaffees erhält man im Kaffeegetränk Gesamt-Chlorogensäuregehalte über ca. 174 mg/100 ml Kaffee (z.B. ca. 160 mg Mono-C. und ca. 14 mg Di-C). Erfindungsgemäß wird daher an geeigneter Stelle des Verfahrens zur Herstellung von Instantkaffeepulver oder dem fertigen Instantkaffeepulver soviel Gesamt-Chlorogensäure zugesetzt, daß ein Kaffee mit dem angestrebten höheren Gesamt-Chlorogensäuregehalt erhalten wird. Dazu ist normalerweise ein Zusatz von etwa 5,7 bis 8,0, insbesondere etwa 6,9 Gew.% Gesamt-Chlorogensäure zum Instantpulver erforderlich, so daß dessen Gehalt mehr als 9,0 Gew.%, vorzugsweise mindestens etwa 9,5 Gew.% beträgt.

Zur näheren Erläuterung der Erfindung sollen die nachfolgenden Beispiele dienen, auf welche die Erfindung jedoch nicht beschränkt ist. Alle Prozentangaben sind Gewichtsprozent.

Die angegebenen Gehalte an Mono- und Dicaffeoylchinasäuren wurden mit Hilfe der Hochdruckflüssigkeitschromatographie (HPLC) mittels Graduentenelution wie folgt bestimmt:

Trennsäule: ET 250/8/4 Nucleosil 5C 18 HOP (Macherey u. Nagel)
Mobile phase: Methanol+wässrige Essigsäure (2%ig)
Flußrate: 0,8 ml/min.
Detektor: Biotronik UV—BT 3030 bei 325 nm
Integrator: Shimadzu CR 1B

Die Meßlösung wurde hergestellt durch Extraktion des gemahlenen Ausgangsmaterials im Ultraschallbad mit Wasser und Filtration durch ein 45 μm-Filter. Als Eichlösung diente eine Lösung von 5 mg 3-Caffeoylchinasäure in 100 ml Wasser.

Zur Berechnung der Gehalte der Monocaffeoylchinasäuren wurde die Summe der Peakflächen der 3-, 4- und 5-Caffeoylchinasäuren auf die Peakfläche der Vergleichssubstanz bezogen. Für die Berechnung der Dicaffeoylchinasäuren wurde ebenfalls Bezug auf die genannte Vergleichssubstanz genommen, vergl. W. W. Schünemann, Dissertation, Braunschweig 1985.

Die Bestimmung des Farbwertes erfolgt mit einem Farbmeßgerät vom Typ Tricolor LFM 3 der Firma Lange-Industriemeßgeräte. Zur Messung wird in einer Küvette befindlicher Mahlkaffee mit standardisiertem Mahlgrad unter einem Winkel von 45° mit einer Lichtquelle angestrahlt und das diffus reflektierte Licht von drei Photoempfängern gleichzeitig erfaßt. Als Maß für die Farbintensität des Kaffees wird der auf der Hell-Dunkel-Achse gemessene Wert L* (DIN 6174, CIE-LAB 1976) herangezogen. Die L*-Werte werden über lineare Regression in den Farbwert, der in Skalenteilen (Skt.) angegeben wird, umgerechnet. Folgende drei Wertepaare ergeben die Regressionsgrade: L* 19,69/75 Skt. L* 22,30/90 Skt, L* 25,77/110 Skt. Die Farbe der üblicherweise gerösteten Kaffees liegt bei dem beschriebenen Meßverfahren bei 90 Skt. Bei heller gerösteten Kaffees werden entsprechend höhere Zahlenwerte gemessen.

Beispiel 1

7 kg Rohkaffee wurden mit 16,1 l Wasser 1,5 Stunden lang bei 80°C unter ständiger Bewegung extrahiert. Nach Abgießen der Extraktlösung werden die Bohnen von anhaftendem Saft durch Absprühen mit Wasser befreit, auf ca. 12,5 % Wassergehalt zurückgetrocknet und in Heißluft bei 240°C geröstet. Sprühwasser und Extraktlösung wurden vereinigt, auf einen Trockensubstanzgehalt von ca. 20% schonend eingeengt und dieses Konzentrat wurde in einem Rotationskolben auf den vorgelegten Röstkaffee aufgesprüht. Die Bohnen nahmen die Lösung auf und konnten dann im Heißluftstrom bei 90°C bis auf einen Restwassergehalt von ca. 3% zurückgetrocknet werden. Eine nicht extrahierte Vergleichsprobe des Ausgangsmaterials wurde direkt wie oben geröstet. Beide Kaffees wurden wegen der sensorischen Vergleichbarkeit auf den gleichen Röstgrad gebracht, wobei die Farbwertmessung als Maß für den Röstgrad diente. Die folgende Tabelle 1 zeigt die gefundenen analytischen Daten im Vergleich.

TABELLE 1

| | Gesamt-Chloro-gensäuregehalt % i.T. | Extraktgehalt % i.T. | Farbwert |
|---|---|---|---|
| Röstkaffee erfindungsgemäß behandelt | 3,68 | 27,1 | 92 |
| Röstkaffee, unbehandelt | 2,24 | 26,8 | 90 |

5

Das erfindungsgemäß behandelte Produkt wies einen gegenüber dem unbehandelten Vergleich um rund 50% angehobenen Chlorogensäuregehalt auf, wobei der Aufgruß sensorisch der unbehandelten Probe vergleichbar war.

Beispiel 2

3 kg entcoffeinierter Columbia-Rohkaffee mit einer Ausgangsfeuchte von 11.2% wurden mit Wasser in ruhender Schüttung bei 80°C in zwei Stufen so extrahiert, daß ca. 60% der löslichen Inhaltsstoffe des Rohkaffees gelöst wurden. Die wässrigen Extrakte wurden unter schonenden Bedingungen auf eine Konzentration von ca. 23 g/100 g Trockensubstanz aufkonzentriert. Mit Hilfe der Gelpermeationschromatographie, wie sie in der EP—A—299 017 beschrieben ist, wurden die Extraktbestandteile an SEPHADEX® G 15 in drei Fraktionen zerlegt:

Fraktion 1: von Chlorogensäure befreiter Extrakt
Fraktion 2: Monocaffeoylchinasäuren
Fraktion 3: Dicaffeoylchinasäuren

Die erhaltenen Fraktionen wurden ebenfalls auf eine Konzentration von ca. 23 g/100 g Trockensubstanz aufkonzentriert. Die von Chlorogensäure betreifte Fraktion hatte einen Restchlorogensäuregehalt von 0,34% i.Tr. Fraktion 2 hatte einen Gehalt an Monocaffeoylchinasäuren in Höhe von 67,2% i.Tr. und Fraktion 3 einen Gehalt an Dicaffeoylchinasäuren von 61,5% i. Tr. Der teilextrahierte Rohkaffee wurde durch Heißlufttrocknung während 70 Min. bei 80°C auf eine Feuchte von ca. 15% zurückgetrocknet. Diesem Kaffee wurde unter ständiger Bewegung die aufkonzentrierte Fraktion 1 wieder zugesetzt. Danach wurde der Kaffee auf eine Sollfeuchte von 11% zurückgetrocknet und in 500 g-Chargen auf einen Farbwert von 90 Skt. geröstet.

Der erhaltene Röstkaffee wurde in Teilmengen mit den erhaltenen Fraktionen 2 und 3 in verschiedenen Variationen imprägniert und auf unter 5% Restfeuchte zurückgetrocknet.

In einer Variante gemäß Pos. 5 der Tabelle 2 wurde der Röstkaffe nur mit Fraktion 2 imprägniert, bei Pos. 6 mit Fraktion 3 und bei Pos. 7 mit einem Gemisch aus Fraktionen 2 und 3. Der Zusatz der aufkonzentrierten Fraktionen erfolgte in anteiligen Verhältnisse zum Kaffee. Die Ergebnisse sind in Tabelle 2 zusammengestellt.

### TABELLE 2

Chlorogensäuregehalte der Kaffees aus Beispiel 2

| Nr. | | Mono-Caffeoyl-chinasäuren (% i.Tr.) | Di-Caffeoyl-chinasäuren (% i.Tr.) | Σ Chlorogen-säuren (% i.Tr.) |
|---|---|---|---|---|
| 1 | entcoff. Columbia Rohkaffee | 5,57 | 0,67 | 6,24 |
| 2 | entcoff. Columbia Röstkaffee (90 Skt.) | 2,28 | 0.16 | 2,44 |
| 3 | entcoff. Columbia Rohkaffee nach Teilentzug der Chlorogensäuren | 2,23 | 0,27 | 2,50 |
| 4 | Kaffee Nr. 3 nach Rösten auf 90 Skt. | 0,97 | 0,06 | 1,03 |
| 5 | Kaffee Nr. 4 nach Imprägnieren mit Fr. 2 | 3,98 | 0,06 | 4,04 |
| 6 | Kaffee Nr. 4 nach Imprägnieren mit Fr. 3 | 0,97 | 0,42 | 1,39 |
| 7 | Kaffee Nr. 4 nach Imprägnieren mit Fr. 2+3 | 3,98 | 0,42 | 4,40 |

### Patentansprüche

1. Röstkaffee mit einem erhöhten Gehalt an Mono- und Dicaffeoylchinasäuren, welcher in einer handelsüblichen Röstung mit einem Farbwert des gemahlenen Kaffees von 130 bis 90 mindestens 3,2 Gew.% beträgt, wobei der Gehalt an Mono- und Dicaffeoylchinasäuren bezogen auf den Mindestgehalt von 3.2 Gew.% prozentual um mindestens den halben Betrag weiter erhöht ist, um den jeweils der Farbwert prozentual unter den Wert von 90 fällt.

2. Instant-Kaffeepulver mit einem erhöhten Gehalt an Mono- und Dicaffeoylchinasäuren, welcher mehr als 9.0 Gew.% beträgt.

3. Kaffee nach Anspruch 1 oder 2, dadurch gekennzeichnet, daß er die Mono- und/oder Dicaffeoylchinasäuren mindestens teilweise in Form von Salzen enthält.

4. Kaffee mit einem erhöhten Gehalt an Inhaltsstoffen, insbesondere einem Gehalt an Mono- und

6

Dicaffeoylchinasäuren von mindestens 3.2 Gew.%, welche dem Rohkaffee entzogen und dem Röstkaffee zugesetzt worden sind.

5. Verfahren zur Herstellung von Kaffee gemäß den Ansprüchen 1 bis 4, dadurch gekennzeichnet, daß man durch Behandeln von Rohkaffee mit einem Lösungsmittel einen Extrakt herstellt, den extrahierten Kaffee und/oder eine nicht extrahierte Kaffeecharge röstet, den gegebenenfalls aufkonzentrierten Extrakt ganz oder teilweise dem Röstkaffee vor oder nach dem Mahlen zusetzt und den Kaffee trocknet.

6. Verfahren nach Anspruch 5, dadurch gekennzeichnet, daß man als Lösungsmittel Wasser verwendet.

7. Verfahren nach Anspruch 5 oder 6, dadurch gekennzeichnet, daß man den Rohkaffee-Extrakt auf einen Feststoffgehalt von mehr als 15 Gew.% aufkonzentriert.

8. Verfahren nach Anspruch 5, dadurch gekennzeichnet, daß man bei 60 bis 120°C trocknet.

9. Verfahren nach einem der Ansprüche 5 bis 8, dadurch gekennzeichnet, daß man aus dem Rohkaffee-Extrakt die Inhaltsstoffe abtrennt, welche dem Röstkaffee wieder zugesetzt werden sollen, während man 0 bis 100% des zurückbleibenden Extraktes dem Rohkaffee vor dem Rösten wieder zufügt.

10. Verfahren nach einem der Ansprüche 5 bis 8, dadurch gekennzeichnet, daß man zum Extrahieren des Rohkaffees einen im Kreislauf geführten Extrakt verwendet, der nur hinsichtlich der Inhaltsstoffe, die später dem Röstkaffee zugesetzt werden sollen, nicht gesättigt ist, und anschließend die Inhaltsstoffe auf an sich bekannte Weise abtrennt.

11. Verfahren nach einem der Ansprüche 5 bis 10, dadurch gekennzeichnet, daß man einen Mono- und Dicaffeoylchinasäuren enthaltenden Extrakt herstellt und zumindest einen Teil der extrahierten Mono- und/oder Dicaffeoylchinasäuren dem Röstkaffee zusetzt.

12. Verfahren zur Herstellung von Röstkaffee gemäß den Ansprüchen 1 bis 3, dadurch gekennzeichnet, daß man zu Röstkaffee isolierte Mono- und/oder Dicaffeoylchinasäuren zusetzt.

13. Verfahren zur Herstellung von Röstkaffee gemäß Anspruch 3, dadurch gekennzeichnet, daß man die Mono- und/oder Dicaffeoylchinasäuren dem Röstkaffee zumindest teilweise in Firm von Salzen zusetzt.

14. Verfahren zur Herstellung von Röstkaffee gemäß den Ansprüchen 1 bis 3, dadurch gekennzeichnet, daß man die Mono- und/oder Dicaffeoylchinasäuren einem Rohkaffee in solcher Menge zusetzt, daß das daraus hergestellte Röstprodukt einen Gehalt an Mono- und Dicaffeoylchinasäuren von mehr als 3,2 Gew.% aufweist.

15. Verfahren zur Herstellung von Röstkaffee mit deutlich erhöhtem Gehalt an Mono- und Dicaffeoylchinasäuren von mindestens 3.2 Gew.%, dadurch gekennzeichnet, daß man durch Behandeln von Rohkaffee mit einem Lösungsmittel einen Extrakt herstellt, den extrahierten Kaffee auf einen mittleren Wassergehalt zurücktrocknet, ihn mit einem aufkonzentrierten Extrakt wieder imprägniert, auf Röstfeuchte zurücktrocknet und dann röstet.

16. Verfahren zu Herstellung von Röstkaffee gemäß Anspruch 1, dadurch gekennzeichnet, daß man Rohkaffee einer Provenienz und/oder einer Art und/oder Rohkaffees mit unterschiedlichem Gehalt an Mono- und Dicaffeoylchinasäuren verschieden stark röstet und daraus eine Mischung herstellt, die gegenüber einer Einheitströstung einen deutlich erhöhten Gehalt an Mono- und Dicaffeoylchinasäuren aufweist, der dann bedarfsweise durch Zusatz isolierter Mono- und/oder Dicaffeoylchinasäuren auf über 3,2 Gew.% angehoben wird.

17. Verfahren zur Herstellung von Röstkaffee gemäß den Ansprüchen 14 bis 16, dadurch gekennzeichnet, daß man zumindest einen Teil des dort eingesetzten Rohkaffees den Verfahren gemäß den Ansprüchen 5 bis 11 und 13 bis 14 unterzieht.

18. Verfahren gemäß den Ansprüchen 5 bis 17, dadurch gekennzeichnet, daß man von entcoffeinierten oder teilentcoffeinierten Rohkaffees ausgeht oder bei der Extraktion auch das Coffein teilweise oder vollständig dem Rohkaffee entzieht.


## Revendications

1. Café torréfié à teneur accrue en mono- et diacides de caféoylchine, égale à au moins 3,2% en poids dans une torréfaction conventionnelle avec une valeur chromatique du café moulu de 130 à 90, la teneur en mono- et diacides de caféoylchine étant encore accrue, en pourcentage, par rapport à la teneur minimale de 3,2% en poids, d'au moins la moitié du montant duquel la valeur chromatique descend chaque fois, en pourcentage, en dessous de la valeur de 90.

2. Poudre de café instantané à teneur accrue en mono- et diacides de caféoylchine, égale à plus de 9,0% en poids.

3. Café selon la revendication 1 ou 2, caractérisé en ce qu'il contient les mono- et/ou diacides de caféoylchine au moins en partie sous forme de sels.

4. Café à teneur accrue en constituants, notamment à teneur en mono- et diacides de caféoylchine d'au moins 3,2% en poids, qui ont été extraits du café brut et additionnés au café torréfié.

5. Procédé de préparation de café selon les revendications 1 à 4, caractérisé en ce qu'on réalise un extrait en traitant du café brut avec un agent de dissolution, on torréfie le café extrait et/ou un charge de café non extraite, on additionne en totalité ou en partie l'extrait éventuellement concentré au café brut, avant ou après la mouture, et on sèche le café.

7

6. Procédé selon la revendication 5, caractérisé en ce qu'on utilise de l'eau comme agent de dissolution.

7. Procédé selon la revendication 5 ou 6, caractérisé en ce qu'on concentre l'extrait de café brut à une teneur de matières solides supérieure à 15% en poids.

8. Procédé selon la revendication 5, caractérisé en ce qu'on effectue le séchage de 60 à 120°C.

9. Procédé selon l'une des revendications 5 à 8, caractérisé en ce qu'on sépare de l'extrait de café brut les constituants qui doivent être ré-additionnés au café torréfié, tandis qu'on ré-additionne au café brut 0 à 100% de l'extrait résiduel, avant la torréfaction.

10. Procédé selon l'une des revendications 5 à 8, caractérisé en ce qu'on utilise, pour l'extraction du café brut, un extrait guidé en circuit fermé, qui est non saturé uniquement en ce qui concerne les constituants qui doivent être ultérieurement additionnés au café torréfié, puis on sépare les constituants d'une manière connue.

11. Procédé selon l'une des revendications 5 à 10, caractérisé en ce qu'on réalise un extrait contenant des mono- et diacides de caféoylchine, et on additionne au café torréfié au moins une partie des mono- et/ou diacides de caféoylchine extraits.

12. Procédé de préparation de café torréfié selon les revendications 1 à 3, caractérisé en ce qu'on additionne au café torréfié des mono- et/ou diacides de caféoylchine isolés.

13. Procédé de préparation de café torréfié selon la revendication 3, caractérisé en ce qu'on additionne au café torréfié les mono- et/ou diacides de caféoylchine au moins en partie sous forme de sels.

14. Procédé de préparation de café torréfié selon les revendications 1 à 3, caractérisé en ce qu'on additionne à un café brut les mono- et/ou diacides de caféoylchine en une quantité telle que le produit torréfié ainsi obtenu présente une teneur en mono- et diacides de caféoylchine supérieure à 3,2% en poids.

15. Procédé de préparation de café torréfié à teneur nettement accrue en mono- et diacides de caféoylchine, au moins égale à 3,2% en poids, caractérisé en ce qu'on réalise un extrait en traitant du café brut avec un agent de dissolution, on sèche à nouveau le café extrait à une teneur en eau moyenne, on l'imprègne à nouveau d'un extrait concentré, on le sèche à nouveau à l'humidité de torréfaction, puis on le torréfie.

16. Procédé de préparation de café torréfié selon la revendication 1, caractérisé en ce qu'un torréfie avec des intensités différentes du café brut d'une provenance et/ou d'une sorte et/ou des cafés bruts à teneurs différentes en mono- et diacides de caféoylchine, et on obtient un mélange résultant qui présente, par rapport à une torréfaction uniforme, une teneur nettement accrue en mono- et diacides de caféoylchine, teneur qui si nécessaire encore accrue à plus de 3,2% en poids par addition de mono- et/ou diacides de caféoylchine isolés.

17. Procédé de préparation de café torréfié selon les revendications 14 à 16, caractérisé en ce qu'on soumet au moins une partie du café brut qui y employé, au procédé selon les revendications 5 à 11 et 13 à 14.

18. Procédé selon les revendications 5 à 17, caractérisé en ce qu'on part de café brut décaféiné ou partiellement décaféiné, ou bien, lors de l'extraction, on extrait également la caféine en totalité ou en partie du café brut.

## Claims

1. Roasted coffee with an increased content of mono- and di-caffeoyl chinic acids, which amounts to at least 3.2 % by weight in a commercial roasting with a ground coffee colour value of 130 to 90, the content of mono- and di-caffeoyl chinic acids, referred to the minimum content of 3.2% by weight, being further increased in percentage terms by at least a half, at which point the colour value falls respectively in percentage terms below the value of 90.

2. Instant coffee powder with an increased content of mono- and di-caffeoyl chinic acids which amounts to more than 9.0% by weight.

3. Coffee according to Claim 1 or 2, characterized in that it contains the mono- and/or di-caffeoyl chinic acids at least in part in the form of salts.

4. Coffee with an increased content of constituents, in particular a content of mono- and di-caffeoyl chinic acids of at least 3.2% by weight, which have been removed from the raw coffee and added to the roasted coffee.

5. Process for the preparation of coffee according to Claims 1 to 4, characterized in that an extract is prepared by treating raw coffee with a solvent, the extracted coffee and/or a non-extracted coffee batch is roasted, the optionally concentrated extract is added completely or partly to the roasted coffee before or after grinding and the coffee is dried.

6. Process according to Claim 5, characterized in that water is used as the solvent.

7. Process according to Claim 5 or 6, characterized in that the raw coffee extract is concentrated to a solids content of more than 15% by weight.

8. Process according to Claim 5, characterized in that drying is carried out at 60 to 120°C.

9. Process according to Claims 5 to 8, characterized in that those constituents are isolated from the raw coffee extract which are to be added again to the roasted coffee, while 0 to 100% of the remaining extract is added again to the raw coffee before roasting.

10. Process according to one of Claims 5 to 8, characterized in that for the extraction of the raw coffee a recycled extract is used which is not saturated only with regard to the constituents which are subsequently to be added to the roasted coffee, and following this the constituents are separated off in a manner known per se.

11. Process according to one of Claims 5 to 10, characterized in that an extract containing mono- and di-caffeoyl chinic acids is prepared and at least part of the extracted mono- and/or di-caffeoyl chinic acids is added to the roasted coffee.

12. Process for the preparation of roasted coffee according to Claims 1 to 3, characterized in that isolated mono- and/or di-caffeoyl chinic acids are added to roasted coffee.

13. Process for the preparation of roasted coffee according to Claim 3, characterized in that the mono- and/or di-caffeoyl chinic acids are added to the roased coffee at least in part in the form of salts.

14. Process for the preparation of roasted coffee according to Claims 1 to 3, characterized in that the mono- and/or di-caffeoyl chinic acids are added to a raw coffee in such a quantity that the roasted product prepared therefrom has a content of mono- and di-caffeoyl chinic acids of more than 3.2% by weigmt.

15. Process for the preparation of roasted coffee with a markedly increased content of mono- and di-caffeoyl chinic acids of at least 3.2% by weight, characterized in that an extract is prepared by treating the raw coffee with a solvent, the extracted coffee is re-dried to an medium water content, it is impregnated again with a concentrated extract, re-dried to roasting moisture and then roasted.

16. Process for the preparation of roasted coffee according to Claim 1, characterized in that raw coffee of one origin and/or one type and/or raw coffees with different contents of mono- and di-caffeoyl chinic acids are roasted to different degrees and a blend is prepared therefrom which compared with a single roasting has a notably higher content of mono- and di-caffeoyl chinic acids, which is then, if necessary, increased by the addition of isolated mono- and/or di-caffeoyl chinic acids to more than 3.2% by weight.

17. Process for the preparation of roasted coffee according to Claims 14 to 16, characterized in that at least part of the raw coffee used therein is subjected to the process according to Claims 5 to 11 and 13 to 14.

18. Process according to Claims 5 to 17, characterized in that one starts with decaffeinated or partly decaffeinated raw coffee or that during the extraction the caffein is also removed partly or completely from the raw coffee.